# EUROPEAN PATENT SPECIFICATION

(11) **EP 3 435 537 B1**
(45) Date of publication and mention of the grant of the patent: **04.11.2020**
(21) Application number: 18178858.9
(22) Date of filing: 20.06.2018
(51) Int. Cl.: H02P 7/29, H02P 6/08

(54) **FAN AND ROTATIONAL SPEED CONTROL METHOD THEREOF**
GEBLÄSE UND DREHZAHLSTEUERUNGSVERFAHREN DAFÜR
VENTILATEUR ET SON PROCÉDÉ DE COMMANDE DE VITESSE DE ROTATION

(30) Priority: 13.07.2017 TW 106123486
(43) Date of publication of application: 30.01.2019
(73) Proprietor: Sunonwealth Electric Machine Industry Co., Ltd., Kaohsiung City (TW)
(72) Inventor: HORNG, Alex, Kaohsiung City, Taiwan (R.O.C.) (TW); Chiu, Chih-Hsiang, Kaohsiung City, Taiwan (R.O.C.) (TW)
(74) Representative: Louis Pöhlau Lohrentz

(56) References cited:
- US-A1- 2006 236 706
- US-A1- 2009 309 535
- US-A1- 2010 225 263

## Description

### BACKGROUND OF THE INVENTION

### 1. Field of the Invention

The present invention relates to a fan and a rotational speed control method thereof and, more particularly, to a fan capable of automatically adjusting the rotational speed without reference to a motor operating current, and a rotational speed control method of the fan.

### 2. Description of the Related Art

A conventional air-exchange fan (or so-called ventilator) can be connected to a plurality of spaces or machines via a plurality of air ducts and can be driven by a motor to rotate for driving air currents to flow for air exchange or ventilation. The static pressure withstood by the fan is affected by the size and quantity of the spaces to be ventilated, the length and diameter of the air ducts, etc. Given a fixed power of the motor driving the fan to rotate, the flow rate of the fan is reduced when the static pressure increases, and the flow rate of the fan is increased when the static pressure is reduced. When the flow rate of the fan is smaller than the desired total air discharge, the exhaust gas discharge efficiency is low, causing damage to the machines or lack of oxygen in an open/closed space. When the flow rate of the fan is larger than the desired total air discharge, pressure imbalance between the inside and the outside of the space and a waste of energy occur. Since the flow rate of the fan is positively correlated with the wind speed passing through an opening of the fan, the wind speed can be adjusted by controlling the rotational speed of the fan to thereby control the flow rate.

Conventional methods for controlling a rotational speed of a fan requires measurement of an operating current value of the motor of the fan and the rotational speed of the fan, and algorithm is performed to maintain a stable rotational speed under different air discharge demands or to identify whether to switch to a proper rotational speed.

However, reading the current value requires a serial connection of a galvanometer and the circuit to be detected, and the motor wiring must be cut during mounting or replacement of the galvanometer, leading to difficulties in use and maintenance. Furthermore, the current signal must be amplified by an amplifier and is, thus, apt to incur noise signals which must be filtered by an extra filter. Thus, the circuit is complicated, increasing the installation cost of the circuit. Furthermore, the accuracy of the result of the algorithm affects the stability of the rotational speed.

U.S. Patent Public No. 2009/0309535A1 discloses a motor control apparatus and motor control method which implement an improved motor control operation of an electric motor. In addition, U.S. Patent Public No. 2010/0225263A1 discloses a motor driving circuit and method for driving motor, which uses pulse width modulation (PWM) to start up the motor.

Thus, improvement to the conventional fan and the rotational speed control method thereof is necessary.

### SUMMARY OF THE INVENTION

To solve the above problem, the present invention provides a method for controlling a rotational speed of a fan. The method refers to a corresponding relation between a variable duty cycle value and a motor rotational speed without the need of measuring the operating current value of the motor.

The present invention provides method for controlling a rotational speed of a fan to automatically adjust the rotational speed to a proper value by cooperating with a change in the environmental pressure, avoiding insufficient air exchange amount or a waste of energy.

A method for controlling a rotational speed of a fan according to the present invention comprises: an initialization step including using a control unit to start a motor of the fan according to an initial duty cycle value; characterised by a first constant speed step including using the control unit to compare a motor rotational speed with a first target rotational speed, wherein the duty cycle value outputted by the control unit is changed to make the motor rotational speed equal to the first target rotational speed when the motor rotational speed is different from the first target rotational speed, wherein when the motor rotational speed is equal to the first target rotational speed, it is determined whether the duty cycle value and a first target duty cycle value satisfy a first relational expression, if not, the first constant speed step is repeated; and a second constant speed step: wherein when the duty cycle value and the first target duty cycle value satisfy the first relational expression in the first constant speed step, the control unit compares the motor rotational speed with a second target rotational speed, wherein the duty cycle value outputted by the control unit is changed to make the motor rotational speed equal to the second target rotational speed when the motor rotational speed is different from the second target rotational speed, wherein when the motor rotational speed is equal to the second target rotational speed, it is determined whether the duty cycle value and a second target duty cycle value satisfy a second relational expression, if not, the second constant speed step is repeated, and if so, the first constant speed step is performed.

Thus, the method for controlling the rotational speed of the fan according to the present invention does not need to refer to the operating current of the motor for algorithm. Instead, through comparison of the motor rotational speed and adjustment of the duty cycle value, the fan maintains at a constant speed to provide a stable flow rate no matter whether the static pressure of the environment in which the fan is located changes or not.

In a possible example, the duty cycle value is positively correlated with the motor rotational speed, the first relational expression is that the duty cycle value is smaller than the first target duty cycle value, the second relational expression is that the first target duty cycle value is larger than the second target duty cycle value, and the first target duty cycle value is larger than the second target duty cycle value. Thus, the duty cycle value can be used to control the fan to rotate at a high speed or a low speed, thereby fulfilling the air exchange demand while saving energy.

In another example, the duty cycle value is negatively correlated with the motor rotational speed, the first relational expression is that the duty cycle value is larger than the first target duty cycle value, the second relational expression is that the first target duty cycle value is smaller than the second target duty cycle value, and the first target duty cycle value is smaller than the second target duty cycle value. Thus, the duty cycle value can be used to control the fan to rotate at a high speed or a low speed, thereby fulfilling the air exchange demand while saving energy.

In a possible example, the fan is an air exchange fan connected to a plurality of open/closed spaces. Thus, a single fan can be used to provide air exchange for a plurality of open/closed spaces.

In a possible example, the first target rotational speed, the second target rotational speed, the first target duty cycle value, the second target duty cycle value, the first relational expression, and the second relational expression are stored in the control unit. Thus, the control unit controls the rotational speed through the duty cycle values based on the experimental data without the need of measurement of the current value or use of a complicated algorithm, increasing the accuracy and reducing the manufacturing cost.

In a possible example, the control unit stores a plurality of fan characteristic curves respectively representing a plurality of different duty cycle values. Thus, in the constant speed step, the duty cycle values can be used to control the rotational speed without the need of measurement of the current value or use of a complicated algorithm, increasing the accuracy and reducing the manufacturing cost.

In a possible example, the method proceeds from the first constant speed step to the second constant speed step according to a first hysteresis curve, and the method proceeds from the second constant speed step to the first constant speed step according to a second hysteresis curve. Thus, the setting of the first hysteresis curve and the second hysteresis curve can avoid excessively frequent switching of the motor rotational speed within a short period of time (which would result in damage to the motor or unstable air exchange) when the duty cycle value of the control unit approaches the first duty cycle value or the second duty cycle value. As a result, the accuracy is increased, and the flow rate is stable.

In a possible example, the control unit is a micro controller. Thus, the control unit can store experimental data related to the fan and can proceed with operation to control and stabilize the motor rotational speed.

In a possible example, the control unit includes a driving circuit. The driving circuit is electrically connected to the motor and is configured to drive the motor. Thus, the control unit can output a PWM driving signal with the duty cycle value to operate the motor, thereby controlling the motor rotational speed.

In a possible example, the motor includes a speed detection unit electrically connected to the control unit. Thus, the speed detection unit can detect and transmit a speed signal to the control unit for comparison, monitoring the motor rotational speed and assisting in stabilizing the motor rotational speed.

In a possible example, the control unit and the speed detection unit are integrated on a circuit board, and the circuit board is mounted in the fan or the motor. Thus, the hardware can be simplified to reduce the manufacturing cost.

In a possible example, the speed detection unit is a Hall sensor. Thus, the speed detection unit can detect the motor rotational speed without adversely affecting the rotation of the motor, monitoring the motor rotational speed and assisting in stabilizing the motor rotational speed.

The present invention further provides a fan comprising an impeller, a motor for driving the impeller to rotate at a motor rotational speed, and a control unit electrically connected to the motor. The fan is such that the control unit outputs a driving signal with a duty cycle value to drive the motor to rotate at the motor rotational speed. The fan is characterised in that the control unit executes a first constant speed step including: comparing the motor rotational speed with a first target rotational speed. The duty cycle value outputted by the control unit is changed to make the motor rotational speed equal to the first target rotational speed when the motor rotational speed is different from the first target rotational speed. When the motor rotational speed is equal to the first target rotational speed, it is determined whether the duty cycle value and a first target duty cycle value satisfy a first relational expression. If not, the first constant speed step is repeated. If yes, the control unit executes a second constant speed step. In the second constant speed step, the control unit compares the motor rotational speed with a second target rotational speed. The duty cycle value outputted by the control unit is changed to make the motor rotational speed equal to the second target rotational speed when the motor rotational speed is different from the second target rotational speed. When the motor rotational speed is equal to the second target rotational speed, it is determined whether the duty cycle value and a second target duty cycle value satisfy a second relational expression. If not, the second constant speed step is repeated by the control unit. If so, the first constant speed step is performed by the control unit. The control unit identifies a relation between the duty cycle value and a target duty cycle value to control the motor to constantly rotate at the first target rotational speed or the second target rotational speed. The motor changes from the first target rotational speed to the second target rotational speed according to a first hysteresis curve. The motor changes from the second target rotational speed to the first target rotational speed according to a second hysteresis curve.

Thus, the fan according to the present invention does not need to refer to the operating current of the motor for algorithm. Instead, through adjustment of the duty cycle value, the fan maintains at a constant speed to provide a stable flow rate no matter whether the static pressure of the environment in which the fan is located changes or not.

In a possible example, the fan is an air exchange fan including a plurality of air inlets and an air outlet. Thus, a single fan can be used to perform air exchange for a plurality of open/closed spaces through two-stage constant speed control.

In a possible example, the plurality of air inlets includes three air inlets. Thus, a single fan can be used to perform air exchange for a plurality of open/closed spaces through two-stage constant speed control.

The above and other objectives, features, and advantages of the present invention will become clearer in light of the following detailed description of illustrative embodiments of this invention described in connection with the drawings.

### BRIEF DESCRIPTION OF THE DRAWINGS

FIG. 1 is a block diagram of an embodiment according to the present invention.
FIG. 2 is a diagram illustrating application of an embodiment according to the present invention.
FIG. 3 is a flowchart of an embodiment according to the present invention, with a duty cycle value positively correlated with a motor rotational speed.
FIG. 4 is a diagram showing hysteresis curves during speed switching of an embodiment according to the present invention.

### DETAILED DESCRIPTION OF THE INVENTION

As used herein, the term "flow rate" refers to the multiplication of a ventilation area of a fan and a speed of a wind flowing through the ventilation area, and its unit is m³/s, which can be appreciated by one having ordinary skill in the art.

As used herein, the term "static pressure" refers to a pressure acting on a surface of an object by a gas, which is a pressure measured at a pressure measuring hole in a duct wall, with the pressure being perpendicular to the flowing direction, and its unit is Pa, which can be appreciated by one having ordinary skill in the art.

As used herein, the term "equal rotational speed" refers to two rotational speeds having a difference within a tolerable error range, which can be appreciated by one having ordinary skill in the art.

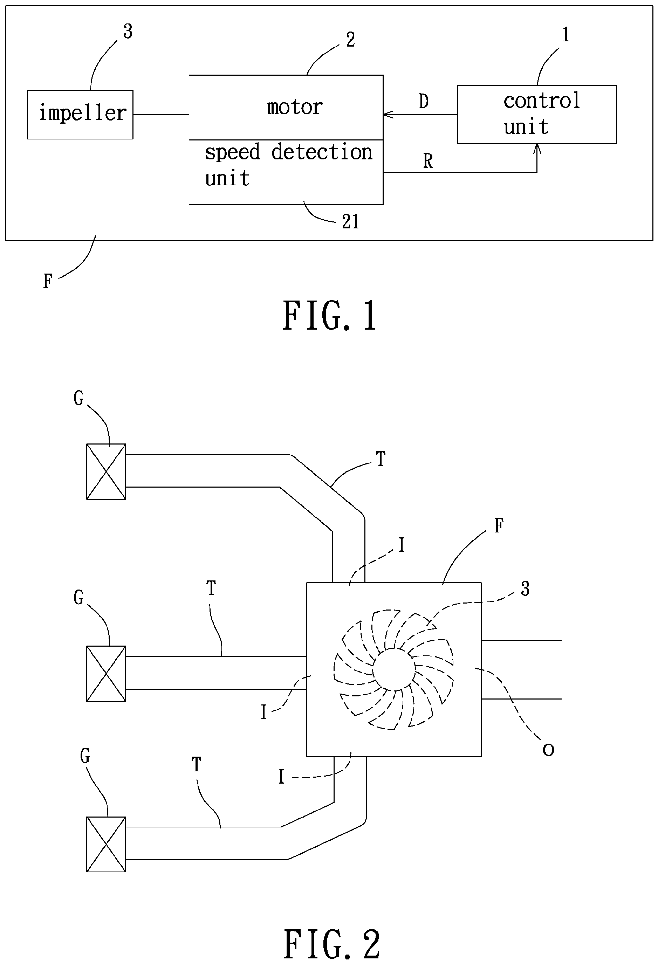

FIG. 1 shows a block diagram of a method for controlling a rotational speed of a fan **F** of an embodiment according to the present invention. The fan **F** includes a control unit 1, a motor 2, and an impeller 3. The control unit 1 can be a micro controller (MCU). The control unit 1 can include a driving circuit electrically connected to the motor 2. The control unit 1 sends a pulse width modulation (PWM) driving signal to drive the motor 2 to rotate. The PWM driving signal includes an adjustable duty cycle value **D.** The motor 2 can drive the impeller 3 to rotate at a motor rotational speed **R** (which is identical to the rotational speed of the impeller 3 and will not be redundantly described hereinafter). The motor 2 includes a speed detection unit 21 electrically connected to the control unit 1. The speed detection unit 21 detects the motor rotational speed **R** and transmits a speed signal to the control unit 1. The speed detection unit 21 can be a Hall sensor.

In this embodiment, the control unit 1 and the speed detection unit 21 can be integrated in a printed circuit board (PCB). The printed circuit board can be mounted in the fan **F** or the motor 2 to simplify the hardware, which is advantageous to reduction of the manufacturing costs.

The control unit 1 can use parameters that are pre-stored to control the motor rotational speed **R,** such as a plurality of fan characteristic curves (static pressure-flow rate curve; namely, **P-Q** curve) respectively representing a plurality of different duty cycle values **D,** the relation between different duty cycle values **D** under a static pressure status and the motor rotational speed **R,** preset target duty cycle values, and preset target rotational speeds. The above parameters are obtained from experimental analyses of the power of the motor 2 and the fan components and can be used to control the motor rotational speed **R** to make the system approach a set target value.

FIG. 2 is a diagram illustrating application of an embodiment according to the present invention. The fan **F** can be an air exchange fan and includes a plurality of air inlets **I** and an air outlet **O.** The plurality of air inlets **I** is respectively connected to a plurality of air ducts **T** which, in turn, is respectively connected to a plurality of open/closed spaces. A gate G is provided between each of the plurality of open/closed spaces and one of the plurality of air ducts **T.** The open/closed spaces requiring air exchange can be selected by opening and closing the plurality of gates **G.** As a result, different static pressures can be formed to influence the flow rate and the rotational speed of the fan **F** (air exchange fan) in operation. In this embodiment, the number of the plurality of air inlets **I** is at least three to perform two-stage constant speed control. However, the present invention is not limited in this regard.

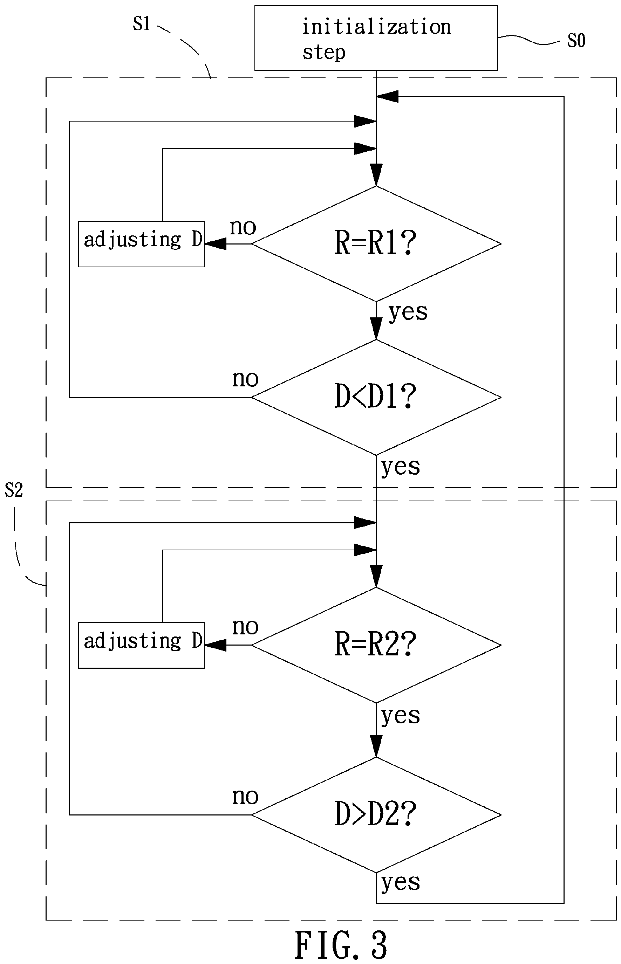

With reference to FIGS. 1 and 3, a method for controlling the rotational speed of the fan **F** according to the present invention includes an initialization step **S0,** a first constant speed step **S1,** and a second constant speed step **S2.** In the initialization step **S0** the control unit 1 sends out a PWM driving signal to start the motor 2. The PWM driving signal includes an initial duty cycle value **D.** The motor 2 drives the impeller 3 to rotate at an initial rotational speed. The speed detection unit 21 detects the motor rotational speed **R** and transmits it to the control unit 1. In this embodiment, the duty cycle value **D** can be, but not limited to, 100%, and the initial rotational speed can be, but not limited to, 1600 rpm (revolutions per minute).

In the first constant speed step **S1** the control unit 1 is used to compare the currently detected motor rotational speed **R** with a first target rotational speed **R1** that is pre-stored in the control unit 1. When the motor rotational speed **R** is different from the first target rotational speed **R1,** the duty cycle value **D** outputted by the control unit 1 is changed to make the motor rotational speed **R** approach the first target rotational speed **R1**. The procedure of comparing the motor rotational speed **R** and adjusting the duty cycle value **D** is repeated until the motor rotational speed **R** is equal to the first target rotational speed **R1**. Then, it is determined whether the current duty cycle value **D** and a first target duty cycle value **D1** that is pre-stored in the control unit 1 satisfy a first relational expression. If the duty cycle value **D** and the first target duty cycle value **D1** do not satisfy the first relational expression, the first constant speed step **S1** is repeated, such that the motor rotational speed **R** remains at the preset first target rotational speed **R1**. If the duty cycle value **D** and the first target duty cycle value **D1** satisfy the first relational expression, the second constant speed step **S2** is performed. In this embodiment, the first target rotational speed **R1** can be, but not limited to, 1300 rpm, and the first target duty cycle value **D1** can be, but not limited to, 70%. Furthermore, the duty cycle value **D** is positively correlated with the motor rotational speed **R,** such that the first relational expression is **D<D1.** However, the present invention is not limited in this regard.

With reference to FIGS. 1-3, specifically, since the fan **F** according to the present invention is connected via the plurality of air ducts **T** to the plurality of open/closed spaces for air exchange, the rotational speed of the fan **F** could be increased or reduced while opening or closing the plurality of gates **G** of the plurality of air ducts **T.** Thus, in this embodiment, when a portion of the plurality of gates **G** is opened or closed, the rotational speed of the fan **F** will vary due to a change in the system static pressure. At this time, the control unit 1 must stabilize the motor rotational speed **R** through adjustment of the duty cycle value **D** to provide a stable flow rate. Furthermore, in this embodiment, when most of the plurality of gates **G** are closed, the fan **F** may only need to receive a PWM driving signal with a duty cycle value **D** smaller than the first target duty cycle value **D1** (e.g., a PWM driving signal with a duty cycle value of 65%) to maintain rotation at the first target rotational speed **R1**. At this time, the control unit 1 identifies that the operation should switch to the second constant speed step **S**2 to operate at a low rotational speed for avoiding a waste of energy.

In the second constant speed step **S2,** the control unit 1 compares the currently detected motor rotational speed **R** with a second target rotational speed **R2** that is pre-stored in the control unit 1. When the motor rotational speed **R** is different from the second target rotational speed **R2,** the duty cycle value **D** outputted by the control unit 1 is changed to make the motor rotational speed **R** approach the second target rotational speed **R2.** The procedure of comparing the motor rotational speed **R** and adjusting the duty cycle value D is repeated until the motor rotational speed **R** is equal to the second target rotational speed **R2.** Then, the current duty cycle value **D** and a second target duty cycle value **D2** are compared. If the duty cycle value **D** and the second target duty cycle value **D2** do not satisfy a second relational expression, the second constant speed step **S2** is repeated. If the duty cycle value **D** and the second target duty cycle value **D2** satisfy the second relational expression, the first constant speed step **S1** is performed. In this embodiment, the second target rotational speed **R2** can be, but not limited to, 1100 rpm, and the second target duty cycle value **D2** can be, but not limited to, 50%. Furthermore, the duty cycle value **D** is positively correlated with the motor rotational speed **R,** such that the second relational expression is **D>D2.** However, the present invention is not limited in this regard.

Specifically, when most of the plurality of gates **G** is opened, the fan **F** may need to receive a PWM driving signal with a duty cycle value **D** larger than the second target duty cycle value **D2** (e.g., a PWM driving signal with a duty cycle value of 55%) to maintain rotation at the second target rotational speed **R2.** At this time, the control unit 1 identifies that the operation should switch to the first constant speed step **S1** to operate at a high rotational speed for fulfilling the air exchange demand.

In the above embodiment, the duty cycle value **D** is positively correlated with the motor rotational speed **R.** Thus, the first relational expression must be satisfied by the duty cycle value **D** and the first target duty cycle value **D1** is **D<D1,** the second relational expression must be satisfied by the duty cycle value **D** and the second target duty cycle value **D2** is **D>D2,** and **D1>D2** in this embodiment. In another embodiment, the duty cycle value **D** is negatively correlated with the motor rotational speed **R.** Thus, the first relational expression must be satisfied by the duty cycle value **D** and the first target duty cycle value **D1** is **D>D1,** the second relational expression must be satisfied by the first target duty cycle value **D1** and the second target duty cycle value **D2** is **D<D2,** and **D1<D2** in this embodiment.

In another embodiment, the method for controlling the rotational speed of the fan **F** according to the present invention can further include a third constant speed step to maintain the fan **F** at a third target rotational speed **R3** between the first target rotational speed **R1** and the second target rotational speed **R2.** Furthermore, a third target duty cycle value **D3** is used to identify whether to switch the motor rotational speed **R.** Accordingly, a fourth constant speed step and a fifth constant speed step can be added to maintain the fan **F** at a fourth target rotational speed or a fifth target rotational speed, and suitable ranges can be set according to the corresponding duty cycle values. However, the present invention is not limited in this regard.

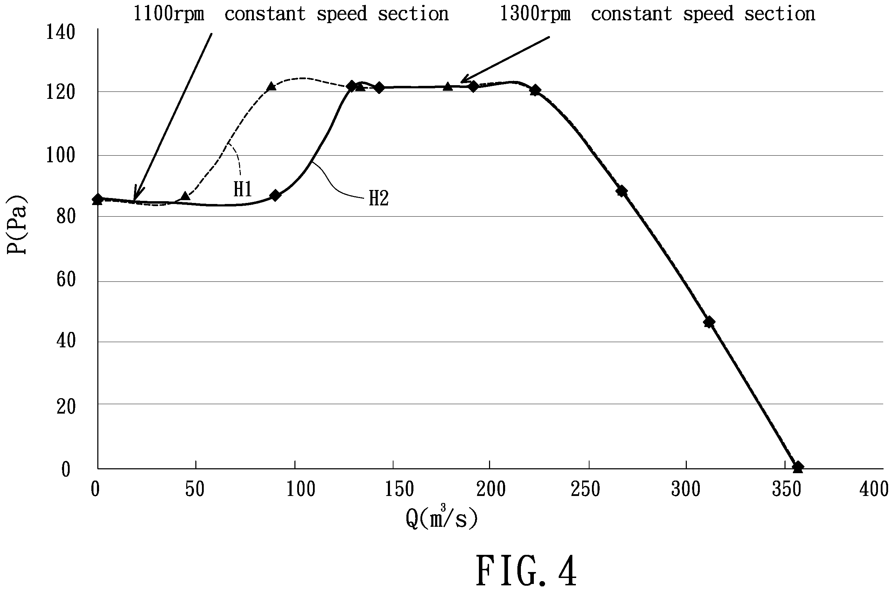

FIG. 4 shows hysteresis curves during speed switching in a method for controlling a rotational speed of a fan **F** of an embodiment according to the present invention. The first constant speed step **S1** corresponds to the 1300 rpm constant speed section of the fan characteristic curve, and the second constant speed step **S2** corresponds to the 1100 rpm constant speed section of the fan characteristic curve. When the method proceeds from the first constant speed step **S1** to the second constant speed step **S2,** a first hysteresis curve **H1** is based. When the method proceeds from the second constant speed step **S2** to the first constant speed step **S1,** a second hysteresis curve **H2** is based. The setting of the first hysteresis curve **H1** and the second hysteresis curve **H2** can avoid excessively frequent switching of the motor rotational speed **R** within a short period of time (which would result in damage to the motor 2 or unstable air exchange) when the duty cycle value **D** of the control unit 1 approaches the first target duty cycle value **D1** or the second target duty cycle value **D2.**

In view of the foregoing, the method for controlling the rotational speed of the fan **F** according to the present invention does not need to refer to the operating current of the motor for algorithm. Instead, the duty cycle values **D** for switching the rotational speed are obtained from previously conducted experiments. Furthermore, the motor rotational speed **R** is compared and the duty cycle value **D** is adjusted, such that the fan **F** maintains at a constant speed no matter whether the static pressure of the environment changes or not, providing a stable air exchange for the open/closed spaces which are opened by the gates **G.**

## Claims

1. A method for controlling a rotational speed of a fan **(F),** comprising:
an initialization step **(S0)** including using a control unit (1) to start a motor (2) of the fan **(F)** according to an initial duty cycle value **(D); characterised by** a first constant speed step **(S1)** including using the control unit (1) to compare a motor rotational speed **(R)** with a first target rotational speed (**R1**), wherein the duty cycle value **(D)** outputted by the control unit (1) is changed to make the motor rotational speed **(R)** equal to the first target rotational speed **(R1)** when the motor rotational speed **(R)** is different from the first target rotational speed **(R1),** wherein when the motor rotational speed **(R)** is equal to the first target rotational speed **(R1),** it is determined whether the duty cycle value **(D)** and a first target duty cycle value **(D1)** satisfy a first relational expression, if not, the first constant speed step **(S1)** is repeated; and
a second constant speed step **(S2):** wherein when the duty cycle value **(D)** and the first target duty cycle value **(D1)** satisfy the first relational expression in the first constant speed step **(S1),** the control unit (1) compares the motor rotational speed **(R)** with a second target rotational speed **(R2),** wherein the duty cycle value **(D)** outputted by the control unit (1) is changed to make the motor rotational speed **(R)** equal to the second target rotational speed **(R2)** when the motor rotational speed **(R)** is different from the second target rotational speed **(R2),** wherein when the motor rotational speed **(R)** is equal to the second target rotational speed **(R2),** it is determined whether the duty cycle value **(D)** and a second target duty cycle value **(D2)** satisfy a second relational expression, if not, the second constant speed step **(S2)** is repeated, and if so, the first constant speed step **(S1)** is performed.

2. The method for controlling the rotational speed of the fan **(F)** as claimed in claim 1, **characterized in that** the duty cycle value **(D)** is positively correlated with the motor rotational speed **(R),** wherein the first relational expression is that the duty cycle value **(D)** is smaller than the first target duty cycle value **(D1),** wherein the second relational expression is that the duty cycle value **(D)** is larger than the second target duty cycle value **(D2),** and wherein the first target duty cycle value **(D1)** is larger than the second target duty cycle value **(D2).**

3. The method for controlling the rotational speed of the fan **(F)** as claimed in claim 1, **characterized in that** the duty cycle value **(D)** is negatively correlated with the motor rotational speed **(R),** wherein the first relational expression is that the duty cycle value **(D)** is larger than the first target duty cycle value **(D1),** wherein the second relational expression is that the duty cycle value **(D)** is smaller than the second target duty cycle value **(D2),** and wherein the first target duty cycle value **(D1)** is smaller than the second target duty cycle value **(D2).**

4. The method for controlling the rotational speed of the fan **(F)** as claimed in claim 1, **characterized in that** the first target rotational speed **(R1),** the second target rotational speed **(R2),** the first target duty cycle value **(D1),** the second target duty cycle value **(D2),** the first relational expression, and the second relational expression are stored in the control unit (1).

5. The method for controlling the rotational speed of the fan **(F)** as claimed in claim 1, **characterized in that** the control unit (1) stores a plurality of fan characteristic curves respectively representing a plurality of different duty cycle values.

6. The method for controlling the rotational speed of the fan **(F)** as claimed in claim 1, **characterized in that** the method proceeds from the first constant speed step **(S1)** to the second constant speed step **(S2)** according to a first hysteresis curve **(H1),** and wherein the method proceeds from the second constant speed step **(S2)** to the first constant speed step **(S1)** according to a second hysteresis curve **(H2).**

7. A fan **(F)** comprising an impeller (3), a motor (2) for driving the impeller (3) to rotate at a motor rotational speed **(R),** and a control unit (1) electrically connected to the motor (2), wherein the control unit (1) outputs a driving signal with a duty cycle value **(D)** to drive the motor (2) to rotate at the motor rotational speed **(R), characterised in that** the control unit (1) is adapted to execute a first constant speed step **(S1)** including: comparing the motor rotational speed **(R)** with a first target rotational speed **(R1),** wherein the duty cycle value **(D)** outputted by the control unit (1) is changed to make the motor rotational speed **(R)** equal to the first target rotational speed **(R1)** when the motor rotational speed **(R)** is different from the first target rotational speed **(R1),** wherein when the motor rotational speed **(R)** is equal to the first target rotational speed **(R1),** it is determined whether the duty cycle value **(D)** and a first target duty cycle value **(D1)** satisfy a first relational expression, if not, the first constant speed step **(S1)** is repeated, if yes, the control unit (1) executes a second constant speed step **(S2),** in the second constant speed step **(S2),** the control unit (1) compares the motor rotational speed **(R)** with a second target rotational speed **(R2),** wherein the duty cycle value **(D)** outputted by the control unit (1) is changed to make the motor rotational speed **(R)** equal to the second target rotational speed **(R2)** when the motor rotational speed **(R)** is different from the second target rotational speed **(R2),** wherein when the motor rotational speed **(R)** is equal to the second target rotational speed **(R2),** it is determined whether the duty cycle value **(D)** and a second target duty cycle value **(D2)** satisfy a second relational expression, if not, the second constant speed step **(S2)** is repeated by the control unit (1), and if so, the first constant speed step **(S1)** is performed by the control unit (1).

8. The fan **(F)** as claimed in claim 7, **characterized in that** the fan **(F)** is an air exchange fan including a plurality of air inlets **(I)** and an air outlet **(O).**

9. The fan **(F)** as claimed in claim 8, **characterized in that** the plurality of air inlets **(I)** includes three air inlets **(I).**

10. The fan **(F)** as claimed in claim 7, **characterized in that** the first target rotational speed **(R1),** the second target rotational speed **(R2),** and the target duty cycle value **(D1, D2)** are stored in the control unit (1), wherein the motor (2) changes from the first target rotational speed **(R1)** to the second target rotational speed **(R2)** according to a first hysteresis curve **(HI),** and wherein the motor (2) changes from the second target rotational speed **(R2)** to the first target rotational speed **(R1)** according to a second hysteresis curve **(H2).**

11. The fan **(F)** as claimed in claim 7, **characterized in that** the control unit (1) stores a plurality of fan characteristic curves respectively representing a plurality of different duty cycle values.

12. The fan **(F)** as claimed in claim 7, **characterized in that** the control unit (1) includes a driving circuit, and wherein the driving circuit is electrically connected to the motor (2) and is configured to drive the motor (2).

13. The fan **(F)** as claimed in claim 7, **characterized in that** the motor (2) includes a speed detection unit (21) electrically connected to the control unit (1).

14. The fan **(F)** as claimed in claim 13, **characterized in that** the control unit (1) and the speed detection unit (21) are integrated on a circuit board, and wherein the circuit board is mounted in the fan **(F)** or the motor (2).

15. The fan **(F)** as claimed in claim 13, **characterized in that** the speed detection unit (21) is a Hall sensor.

## Patentansprüche

1. Verfahren zum Steuern einer Drehzahl eines Gebläses (F), das Folgendes umfasst:
einen Initialisierungsschritt (S0), der das Verwenden einer Steuereinheit (1), um einen Motor (2) des Gebläses (F) gemäß einem Anfangstastverhältniswert (D) zu starten, enthält;
**gekennzeichnet durch**
einen Schritt (S1) mit einer ersten konstanten Drehzahl, der das Verwenden der Steuereinheit (1), um eine Motordrehzahl (R) mit einer ersten Solldrehzahl (R1) zu vergleichen, enthält, wobei der von der Steuereinheit (1) ausgegebene Tastverhältniswert (D) geändert wird, um zu bewirken, dass die Motordrehzahl (R) gleich der ersten Solldrehzahl (R1) wird, wenn die Motordrehzahl (R) von der ersten Solldrehzahl (R1) verschieden ist, wobei dann, wenn die Motordrehzahl (R) gleich der ersten Solldrehzahl (R1) ist, bestimmt wird, ob der Tastverhältniswert (D) und ein erster Solltastverhältniswert (D1) einen ersten Beziehungsausdruck erfüllen, wobei dann, wenn nicht, der Schritt (S1) mit einer ersten konstanten Drehzahl wiederholt wird; und
einen Schritt (S2) mit einer zweiten konstanten Drehzahl, wobei dann, wenn der Tastverhältniswert (D) und der erste Solltastverhältniswert (D1) im Schritt (S1) mit einer ersten konstanten Drehzahl den ersten Beziehungsausdruck erfüllen, die Steuereinheit (1) die Motordrehzahl (R) mit einer zweiten Solldrehzahl (R2) vergleicht, wobei der von der Steuereinheit (1) ausgegebene Tastverhältniswert (D) geändert wird, um zu bewirken, dass die Motordrehzahl (R) gleich der zweiten Solldrehzahl (R2) wird, wenn die Motordrehzahl (R) von der zweiten Solldrehzahl (R2) verschieden ist, wobei dann, wenn die Motordrehzahl (R) gleich der zweiten Solldrehzahl (R2) ist, bestimmt wird, ob der Tastverhältniswert (D) und ein zweiter Solltastverhältniswert (D2) einen zweiten Beziehungsausdruck erfüllen, wobei dann, wenn nicht, der Schritt (S2) mit einer zweiten konstanten Drehzahl wiederholt wird, und dann, wenn ja, der Schritt (S1) mit einer ersten konstanten Drehzahl durchgeführt wird.

2. Verfahren zum Steuern der Drehzahl des Gebläses (F) nach Anspruch 1, **dadurch gekennzeichnet, dass** der Tastverhältniswert (D) mit der Motordrehzahl (R) positiv korreliert ist, wobei der erste Beziehungsausdruck derart ist, dass der Tastverhältniswert (D) kleiner als der erste Solltastverhältniswert (D1) ist, wobei der zweite Beziehungsausdruck derart ist, dass der Tastverhältniswert (D) größer als der zweite Solltastverhältniswert (D2) ist, und wobei der erste Solltastverhältniswert (D1) größer als der zweite Solltastverhältniswert (D2) ist.

3. Verfahren zum Steuern der Drehzahl des Gebläses (F) nach Anspruch 1, **dadurch gekennzeichnet, dass** der Tastverhältniswert (D) mit der Motordrehzahl (R) negativ korreliert ist, wobei der erste Beziehungsausdruck derart ist, dass der Tastverhältniswert (D) größer als der erste Solltastverhältniswert (D1) ist, wobei der zweite Beziehungsausdruck derart ist, dass der Tastverhältniswert (D) kleiner als der zweite Solltastverhältniswert (D2) ist, und wobei der erste Solltastverhältniswert (D1) kleiner als der zweite Solltastverhältniswert (D2) ist.

4. Verfahren zum Steuern der Drehzahl des Gebläses (F) nach Anspruch 1, **dadurch gekennzeichnet, dass** die erste Solldrehzahl (R1), die zweite Solldrehzahl (R2), der erste Solltastverhältniswert (D1), der zweite Solltastverhältniswert (D2), der erste Beziehungsausdruck und der zweite Beziehungsausdruck in der Speichereinheit (1) gespeichert sind.

5. Verfahren zum Steuern der Drehzahl des Gebläses (F) nach Anspruch 1, **dadurch gekennzeichnet, dass** die Steuereinheit (1) mehrere Gebläsekennlinien speichert, die jeweils mehrere verschiedene Tastverhältniswerte darstellen.

6. Verfahren zum Steuern der Drehzahl des Gebläses (F) nach Anspruch 1, **dadurch gekennzeichnet, dass** das Verfahren gemäß einer ersten Hysteresekurve (H1) vom Schritt (S1) mit einer ersten konstanten Drehzahl zum Schritt (S2) mit einer zweiten konstanten Drehzahl voranschreitet, und wobei das Verfahren gemäß einer zweiten Hysteresekurve (H2) vom Schritt (S2) mit einer zweiten konstanten Drehzahl zum Schritt (S1) mit einer ersten konstanten Drehzahl voranschreitet.

7. Gebläse (F), das ein Gebläserad (3), einen Motor (2) zum Antreiben des Gebläserads (3), derart, dass es sich mit einer Motordrehzahl (R) dreht, und eine Steuereinheit (1), die mit dem Motor (2) elektrisch verbunden ist, umfasst, wobei
die Steuereinheit (1) ein Ansteuersignal mit einem Tastverhältniswert (D), um den Motor (2) derart anzusteuern, dass er sich mit der Motordrehzahl (R) dreht, ausgibt,
**dadurch gekennzeichnet, dass**
die Steuereinheit (1) ausgelegt ist,
einen Schritt (S1) mit einer ersten konstanten Drehzahl auszuführen, der enthält:
Vergleichen der Motordrehzahl (R) mit einer ersten Solldrehzahl (R1), wobei der von der Steuereinheit (1) ausgegebene Tastverhältniswert (D) geändert wird, um zu bewirken, dass die Motordrehzahl (R) gleich der ersten Solldrehzahl (R1) wird, wenn die Motordrehzahl (R) von der ersten Solldrehzahl (R1) verschieden ist, wobei dann, wenn die Motordrehzahl (R) gleich der ersten Solldrehzahl (R1) ist, bestimmt wird, ob der Tastverhältniswert (D) und ein erster Solltastverhältniswert (D1) einen ersten Beziehungsausdruck erfüllen, wobei dann, wenn nicht, der Schritt (S1) mit einer ersten konstanten Drehzahl wiederholt wird, dann, wenn ja, die Steuereinheit (1) einen Schritt (S2) mit einer zweiten konstanten Drehzahl ausführt, wobei die Steuereinheit (1) im Schritt (S2) mit einer zweiten konstanten Drehzahl die Motordrehzahl (R) mit einer zweiten Solldrehzahl (R2) vergleicht, wobei der von der Steuereinheit (1) ausgegebene Tastverhältniswert (D) geändert wird, um zu bewirken, dass die Motordrehzahl (R) gleich der zweiten Solldrehzahl (R2) wird, wenn die Motordrehzahl (R) von der zweiten Solldrehzahl (R2) verschieden ist, wobei dann, wenn die Motordrehzahl (R) gleich der zweiten Solldrehzahl (R2) ist, bestimmt wird, ob der Tastverhältniswert (D) und ein zweiter Solltastverhältniswert (D2) einen zweiten Beziehungsausdruck erfüllen, wobei dann, wenn nicht, der Schritt (S2) mit einer zweiten konstanten Drehzahl durch die Steuereinheit (1) wiederholt wird, und dann, wenn ja, der Schritt (S1) mit einer ersten konstanten Drehzahl durch die Steuereinheit (1) durchgeführt wird.

8. Gebläse (F) nach Anspruch 7, **dadurch gekennzeichnet, dass** das Gebläse (F) ein Luftaustauschgebläse ist, das mehrere Lufteinlässe (I) und einen Luftauslass (O) enthält.

9. Gebläse (F) nach Anspruch 8, **dadurch gekennzeichnet, dass** die mehreren Lufteinlässe (I) drei Lufteinlässe (I) enthalten.

10. Gebläse (F) nach Anspruch 7, **dadurch gekennzeichnet, dass** die erste Solldrehzahl (R1), die zweite Solldrehzahl (R2) und der Solltastverhältniswert (D1, D2) in der Steuereinheit (1) gespeichert sind, wobei der Motor (2) gemäß einer ersten Hysteresekurve (H1) von der ersten Solldrehzahl (R1) zur zweiten Solldrehzahl (R2) wechselt und wobei der Motor (2) gemäß einer zweiten Hysteresekurve (H2) von der zweiten Solldrehzahl (R2) zur ersten Solldrehzahl (R1) wechselt.

11. Gebläse (F) nach Anspruch 7, **dadurch gekennzeichnet, dass** die Steuereinheit (1) mehrere Gebläsekennlinien speichert, die jeweils mehrere verschiedene Tastverhältniswerte darstellen.

12. Gebläse (F) nach Anspruch 7, **dadurch gekennzeichnet, dass** die Steuereinheit (1) eine Ansteuerschaltung enthält, und wobei die Ansteuerschaltung mit dem Motor (2) elektrisch verbunden ist und konfiguriert ist, den Motor (2) anzusteuern.

13. Gebläse (F) nach Anspruch 7, **dadurch gekennzeichnet, dass** der Motor (2) eine Drehzahldetektionseinheit (21) enthält, die mit der Steuereinheit (1) elektrisch verbunden ist.

14. Gebläse (F) nach Anspruch 13, **dadurch gekennzeichnet, dass** die Steuereinheit (1) und die Drehzahldetektionseinheit (21) auf einer Leiterplatte integriert sind, und wobei die Leiterplatte im Gebläse (F) oder im Motor (2) angebracht ist.

15. Gebläse (F) nach Anspruch 13, **dadurch gekennzeichnet, dass** die Drehzahldetektionseinheit (21) ein Hall-Sensor ist.

## Revendications

1. Une méthode de commande d'une vitesse de rotation d'un ventilateur (F), comprenant :
une étape d'initialisation (S0) comprenant l'utilisation d'une unité de commande (1) pour démarrer un moteur (2) du ventilateur (F) conformément à une valeur initiale de facteur d'utilisation (D) ;
**caractérisée par**
une étape à première vitesse constante (S1) comprenant l'utilisation de l'unité de commande (1) pour comparer une vitesse de rotation de moteur (R) à une première vitesse de rotation cible (R1), dans laquelle la valeur de facteur d'utilisation (D) délivrée en sortie par l'unité de commande (1) est modifiée pour rendre la vitesse de rotation de moteur (R) égale à la première vitesse de rotation cible (R1) lorsque la vitesse de rotation de moteur (R) est différente de la première vitesse de rotation cible (R1), dans laquelle, lorsque la vitesse de rotation de moteur (R) est égale à la première vitesse de rotation cible (R1), il est déterminé si la valeur de facteur d'utilisation (D) et une première valeur cible de facteur d'utilisation (D1) satisfont à une première expression relationnelle, si ce n'est pas le cas, la étape à première vitesse constante (S1) est répétée ; et
une étape à deuxième vitesse constante (S2) : dans laquelle, lorsque la valeur de facteur d'utilisation (D) et la première valeur cible de facteur d'utilisation (D1) satisfont à la première expression relationnelle dans la étape à première vitesse constante (S1), l'unité de commande (1) compare la vitesse de rotation de moteur (R) à une deuxième vitesse de rotation cible (R2), dans laquelle la valeur de facteur d'utilisation (D) délivrée par l'unité de commande (1) est modifiée pour rendre la vitesse de rotation de moteur (R) égale à la deuxième vitesse de rotation cible (R2) lorsque la vitesse de rotation de moteur (R) est différente de la deuxième vitesse de rotation cible (R2), dans laquelle, lorsque la vitesse de rotation de moteur (R) est égale à la deuxième vitesse de rotation cible (R2), il est déterminé si la valeur de facteur d'utilisation (D) et une deuxième valeur cible de facteur d'utilisation (D2) satisfont à une deuxième expression relationnelle, si ce n'est pas le cas, la étape à deuxième vitesse constante (S2) est répétée, et si c'est le cas, la étape à première vitesse constante (S1) est effectuée.

2. La méthode de commande de la vitesse de rotation du ventilateur (F) selon la revendication 1, **caractérisée en ce que** la valeur de facteur d'utilisation (D) est positivement corrélée à la vitesse de rotation de moteur (R), dans laquelle la première expression relationnelle est que la valeur de facteur d'utilisation (D) est inférieure à la première valeur cible de facteur d'utilisation (D1), dans laquelle la deuxième expression relationnelle est que la valeur de facteur d'utilisation (D) est supérieure à la deuxième valeur cible de facteur d'utilisation (D2), et dans laquelle la première valeur cible de facteur d'utilisation (D1) est supérieure à la deuxième valeur cible de facteur d'utilisation (D2).

3. La méthode de commande de la vitesse de rotation du ventilateur (F) selon la revendication 1, **caractérisée en ce que** la valeur de facteur d'utilisation (D) est négativement corrélée à la vitesse de rotation de moteur (R), dans laquelle la première expression relationnelle est que la valeur de facteur d'utilisation (D) est supérieure à la première valeur cible de facteur d'utilisation (D1), dans laquelle la deuxième expression relationnelle est que la valeur de facteur d'utilisation (D) est inférieure à la deuxième valeur cible de facteur d'utilisation (D2), et dans laquelle la première valeur cible de facteur d'utilisation (D1) est inférieure à la deuxième valeur cible de facteur d'utilisation (D2).

4. La méthode de commande de la vitesse de rotation du ventilateur (F) selon la revendication 1, **caractérisée en ce que** la première vitesse de rotation cible (R1), la deuxième vitesse de rotation cible (R2), la première valeur cible de facteur d'utilisation (D1), la deuxième valeur cible de facteur d'utilisation (D2), la première expression relationnelle, et la deuxième expression relationnelle sont stockées dans l'unité de commande (1).

5. La méthode de commande de la vitesse de rotation du ventilateur (F) selon la revendication 1, **caractérisée en ce que** l'unité de commande (1) stocke une pluralité de courbes caractéristiques de ventilateur représentant respectivement une pluralité de valeurs de facteur d'utilisation différentes.

6. La méthode de commande de la vitesse de rotation du ventilateur (F) selon la revendication 1, **caractérisée en ce que** la méthode passe de la étape à première vitesse constante (S1) à la étape à deuxième vitesse constante (S2) selon une première courbe d'hystérésis (H1), et dans lequel la méthode passe de la étape à deuxième vitesse constante (S2) à la étape à première vitesse constante (S1) selon une deuxième courbe d'hystérésis (H2).

7. Un ventilateur (F) comprenant une roue (3), un moteur (2) pour entraîner la roue (3) de façon à tourner à une vitesse de rotation de moteur (R), et une unité de commande (1) électriquement connectée au moteur (2),
dans lequel
l'unité de commande (1) délivre en sortie un signal de commande avec une valeur de facteur d'utilisation (D) pour entraîner le moteur (2) de façon à tourner à la vitesse de rotation de moteur (R),
**caractérisé en ce que** l'unité de commande (1) est adaptée pour exécuter une étape à première vitesse constante (S1) comprenant :
la comparaison de la vitesse de rotation de moteur (R) à une première vitesse de rotation cible (R1), la valeur de facteur d'utilisation (D) délivrée en sortie par l'unité de commande (1) étant modifiée pour rendre la vitesse de rotation de moteur (R) égale à la première vitesse de rotation cible (R1) lorsque la vitesse de rotation de moteur (R) est différente de la première vitesse de rotation cible (R1), dans lequel, lorsque la vitesse de rotation de moteur (R) est égale à la première vitesse de rotation cible (R1), il est déterminé si la valeur de facteur d'utilisation (D) et une première valeur cible de facteur d'utilisation (D1) satisfont à une première expression relationnelle, si ce n'est pas le cas, la étape à première vitesse constante (S1) est répétée, si c'est le cas, l'unité de commande (1) exécute une étape à deuxième vitesse constante (S2), dans la étape à deuxième vitesse constante (S2), l'unité de commande (1) compare la vitesse de rotation de moteur (R) à une deuxième vitesse de rotation cible (R2), dans lequel la valeur de facteur d'utilisation (D) délivrée par l'unité de commande (1) est modifiée pour rendre la vitesse de rotation de moteur (R) égale à la deuxième vitesse de rotation cible (R2) lorsque la vitesse de rotation de moteur (R) est différente de la deuxième vitesse de rotation cible (R2), dans lequel, lorsque la vitesse de rotation de moteur (R) est égale à la deuxième vitesse de rotation cible (R2), il est déterminé si la valeur de facteur d'utilisation (D) et une deuxième valeur cible de facteur d'utilisation (D2) satisfont à une deuxième expression relationnelle, si ce n'est pas le cas, la étape à deuxième vitesse constante (S2) est répétée, et si c'est le cas, la étape à première vitesse constante (S1) est effectuée par l'unité de commande (1).

8. Le ventilateur (F) selon la revendication 7, **caractérisé en ce que** le ventilateur (F) est un ventilateur à échange d'air comprenant une pluralité d'entrées d'air (I) et une sortie d'air (O).

9. Le ventilateur (F) selon la revendication 8, **caractérisé en ce que** la pluralité d'entrées d'air (I) comprend trois entrées d'air (I).

10. Le ventilateur (F) selon la revendication 7, **caractérisé en ce que** la première vitesse de rotation cible (R1), la deuxième vitesse de rotation cible (R2), et la valeur cible de facteur d'utilisation (D1, D2) sont stockées dans l'unité de commande (1), dans lequel le moteur (2) change de la première vitesse de rotation cible (R1) à la deuxième vitesse de rotation cible (R2) selon une première courbe d'hystérésis (H1), et dans lequel le moteur (2) change de la deuxième vitesse de rotation cible (R2) à la première vitesse de rotation cible (R1) selon une deuxième courbe d'hystérésis (H2).

11. Le ventilateur (F) selon la revendication 7, **caractérisé en ce que** l'unité de commande (1) stocke une pluralité de courbes caractéristiques du ventilateur représentant respectivement une pluralité de valeurs de facteur d'utilisation différentes.

12. Le ventilateur (F) selon la revendication 7, **caractérisé en ce que** l'unité de commande (1) comprend un circuit d'excitation, et dans lequel le circuit d'excitation est électriquement connecté au moteur (2) et est configuré pour exciter le moteur (2).

13. Le ventilateur (F) selon la revendication 7, **caractérisé en ce que** le moteur (2) comprend une unité de détection de vitesse (21) électriquement connectée à l'unité de commande (1).

14. Le ventilateur (F) selon la revendication 13, **caractérisé en ce que** l'unité de commande (1) et l'unité de détection de vitesse (21) sont intégrées sur une carte de circuit, et dans lequel la carte de circuit est montée dans le ventilateur (F) ou le moteur (2).

15. Le ventilateur (F) selon la revendication 13, **caractérisé en ce que** l'unité de détection de vitesse (21 ) est un capteur à effet Hall.
